# EUROPÄISCHE PATENTANMELDUNG

(11) **EP 2 884 151 A1**
(43) Veröffentlichungstag der Anmeldung: **17.06.2015**
(21) Anmeldenummer: 13005747.4
(22) Anmeldetag: 10.12.2013
(51) Int. Cl.: F17C 13/02, H01H 33/66

(54) **Vorrichtung zur Anzeige des Verlusts eines Vakuums**

(71) Anmelder: Linde Aktiengesellschaft, 80331 München (DE)
(72) Erfinder: Ehegartner, Florian, 84524 Neuötting (DE)
(74) Vertreter: Zahn, Christoph

(57) **Zusammenfassung**

Es wird eine Vorrichtung zur Anzeige des Vakuumverlusts eines Vakuumraumes, vorzugsweise des Vakuumraumes eines kryogenen Speicherbehälters beschrieben.

Erfindungsgemäß weist die Vorrichtung ein Hüllrohr, das stirnseitig über wenigstens eine Leitung mit einem Vakuumraum verbindbar ist, und einen in dem Hüllrohr angeordneten Anzeigeblock, der über einen flexiblen Balg in axialer Richtung verschiebbar und gasdicht mit der Stirnseite des Hüllrohres, in der die Leitung endet, verbunden ist, auf, wobei der Balg derart ausgebildet ist, dass der Anzeigeblock bei vorhandenem Vakuum innerhalb des Hüllrohres angeordnet und im Falle des Verlusts des Vakuums zumindest teilweise aus dem Hüllrohr ausgeschoben ist.

## Beschreibung

Die Erfindung betrifft eine Vorrichtung zur Anzeige des Vakuumverlusts eines Vakuumraumes.

Kryogene Speicherbehälter, die der Lagerung verflüssigter Gase, wie Stickstoff, Sauerstoff oder Wasserstoff, dienen, weisen zwischen ihrem Innen- und Außenbehälter einen Vakuumraum auf. Sofern es in diesem zu einem Verlust bzw. Bruch des Vakuums kommt, kommt es aufgrund des damit verbundenen verstärkten Wärmeeinfalls zu einem unerwünschten Verdampfen des in dem kryogenen Behälter gelagerten Mediums.

Die Qualität des Vakuums innerhalb derartiger Vakuumräume kann über bspw. über eine Vakuum-Messzelle, die an einem Messventil angeschlossen ist, gemessen werden. Diese Art der Überwachung ermöglicht es jedoch nicht, einen eventuellen Verlust bzw. Bruch des Vakuums unmittelbar für das Bedienpersonal sichtbar zu machen.

Aufgabe der vorliegenden Erfindung ist es, eine Vorrichtung zur Anzeige des Vakuumverlusts eines Vakuumraumes anzugeben, die es ermöglicht, den Verlust bzw. Bruch des Vakuums innerhalb eines Vakuumraumes direkt sichtbar zu machen.

Zur Lösung dieser Aufgabe wird eine Vorrichtung zur Anzeige des Vakuumverlusts eines Vakuumraumes vorgeschlagen, die
- ein Hüllrohr, das stirnseitig über wenigstens eine Leitung mit einem Vakuumraum verbindbar ist, und
- einen in dem Hüllrohr angeordneten Anzeigeblock, der über einen flexiblen Balg in axialer Richtung verschiebbar und gasdicht mit der Stirnseite des Hüllrohres, in der die Leitung endet, verbunden ist, aufweist,
- wobei der Balg derart ausgebildet ist, dass der Anzeigeblock bei vorhandenem Vakuum innerhalb des Hüllrohres angeordnet und im Falle des Verlusts des Vakuums zumindest teilweise aus dem Hüllrohr ausgeschoben ist.

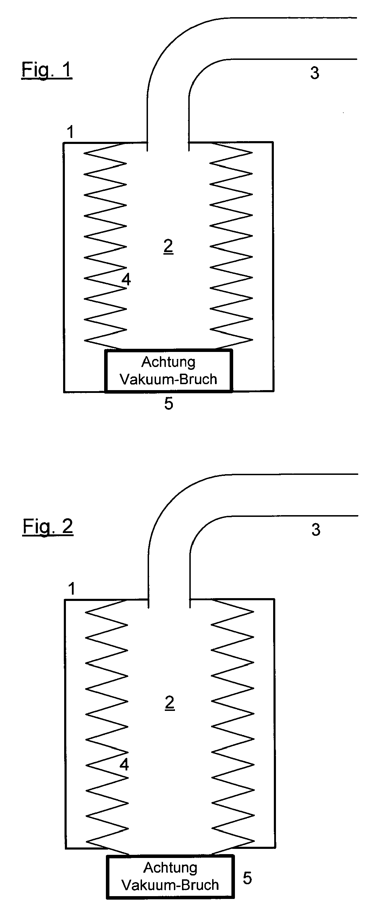

Die erfindungsgemäße Vorrichtung zur Anzeige des Vakuumverlusts eines Vakuumraumes sowie weitere vorteilhafte Ausgestaltungen derselben seien nachfolgend anhand des in den **Figuren 1** und **2** dargestellten Ausführungsbeispieles näher erläutert. Die Figuren zeigen eine seitliche Schnittdarstellung des Ausführungsbeispieles.

Die erfindungsgemäße Vorrichtung zur Anzeige des Vakuumverlusts eines Vakuumraumes besteht aus einem Hüllrohr 1, das an einer seiner Stirnseiten über eine Leitung 3 mit einem in den Figuren nicht dargestellten Vakuumraum, beispielsweise dem Zwischenraum zwischen dem Innen- und Außenbehälter eines Speicherbehälters für kryogene Medien, verbindbar ist. Die erfindungsgemäße Vorrichtung weist ferner einen Anzeigenblock 5 auf, der über einen flexiblen Balg 4 in axialer Richtung verschiebbar und gasdicht mit der vorgenannten Stirnseite des Hüllrohres 1 verbunden ist. Mittels der vorbeschriebenen Konstruktion wird innerhalb des Hüllrohres 1 ein Vakuumraum 2, der mit dem zu überwachenden Vakuumraum in Verbindung steht, definiert.

Der Balg 4 ist erfindungsgemäß derart ausgebildet, dass bei vorhandenem Vakuum der Anzeigeblock 5, wie in der Figur 1 dargestellt, innerhalb des Hüllrohres 1 angeordnet ist. Kommt es nunmehr zu einem Verlust bzw. Bruch des Vakuums entspannt sich der Balg 4 und der Anzeigeblock 5 wird aus dem Hüllrohr 1 ausgeschoben, wie in der Figur 2 dargestellt. In dieser Position ist er für das Bedienpersonal erkennbar, so dass dieses den Verlust des Vakuums unmittelbar erfassen und Gegenmaßnahmen einleiten kann.

Die erfindungsgemäße Vorrichtung zur Anzeige des Vakuumverlusts eines Vakuumraumes ermöglicht eine konstruktiv einfache und unmittelbare Anzeige des Verlust bzw. Bruchs eines Vakuums. Da sie rein mechanisch arbeitet, weist sie eine geringe Fehleranfälligkeit auf.

Gemäß einer vorteilhaften Ausgestaltung kann die erfindungsgemäße Vorrichtung zur Anzeige des Vakuumverlustes eines Vakuumraumes Mittel aufweisen, die im ausgeschobenem Zustand des Anzeigeblocks ein optisches und/oder akustisches Warnsignal und/oder einen Warnhinweis generieren. Unter der Begriffsfolge "Warnhinweis generieren" sei beispielsweise auch das Versenden einer SMS und/oder einer E-Mail an das Bedienpersonal und/oder eine Schaltzentrale zu verstehen.

Entsprechend einer weiteren vorteilhaften Ausgestaltung kann die erfindungsgemäße Vorrichtung zur Anzeige eines Vakuumverlusts eines Vakuumraumes darüber hinaus Mittel aufweisen, die im ausgeschobenen Zustand des Anzeigeblocks wenigstens eine Gegenmaßnahme verlassen, die den weiteren Verlust des Vakuums beendet oder zumindest begrenzt. So kann bspw. ein (weiteres) Befüllen eines defekten kryogenen Speicherbehälters verhindert und damit das Gefährdungspotential reduziert und/oder ein defekter kryogener Speicherbehälter kontrolliert außer Betrieb genommen werden.

## Patentansprüche

1. Vorrichtung zur Anzeige des Vakuumverlusts eines Vakuumraumes, aufweisend
- ein Hüllrohr (1), das stirnseitig über wenigstens eine Leitung (3) mit einem Vakuumraum verbindbar ist, und
- einen in dem Hüllrohr (1) angeordneten Anzeigeblock (5), der über einen flexiblen Balg (4) in axialer Richtung verschiebbar und gasdicht mit der Stirnseite des Hüllrohres (1), in der die Leitung (3) mündet, verbunden ist,
- wobei der Balg (4) derart ausgebildet ist, dass der Anzeigeblock (5) bei vorhandenem Vakuum innerhalb des Hüllrohres (1) angeordnet und im Falle des Verlusts des Vakuums zumindest teilweise aus dem Hüllrohr (1) ausgeschoben ist.

2. Vorrichtung nach Anspruch 1, **dadurch gekennzeichnet, dass** sie Mittel aufweist, die im ausgeschobenen Zustand des Anzeigeblocks (5) ein optisches und/oder akustisches Warnsignal und/oder einen Warnhinweis generieren.

3. Vorrichtung nach Anspruch 1 oder 2, **dadurch gekennzeichnet, dass** sie Mittel aufweist, die im ausgeschobenen Zustand des Anzeigeblocks (5) wenigstens eine Gegenmaßnahme, die den weiteren Verlust des Vakuums begrenzt, veranlasst.
